# EUROPEAN PATENT APPLICATION

(11) **EP 4 618 674 A1**
(43) Date of publication of application: **17.09.2025**
(21) Application number: 22964740.9
(22) Date of filing: 08.11.2022
(51) Int. Cl.: H04W 72/1268, H04L 67/04, H04W 8/22

(54) **UPLINK DATA TRANSMISSION METHODS AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2022/130730
(87) International publication number: WO 2024/098265

(57) **Abstract**

Provided in the present disclosure are uplink data transmission methods and an apparatus, which can be applied to the technical field of communications. A method comprises: in response to a situation in which a first transmission resource allocated to a terminal device for transmitting uplink data exceeds the transmission capability of the terminal device, the terminal device abandoning the transmission of the uplink data, and/or, transmitting a first signal by means of using the first transmission resource, the first signal being used for indicating that the first transmission resource allocated by a network device exceeds the transmission capability of the terminal, and/or, indicating the transmission capability of the terminal. The present disclosure specifies transmission behaviors of a terminal device after it is determined that a first transmission resource for transmitting uplink data exceeds the transmission capability of the terminal device.

## Description

### TECHNICAL FIELD

The disclosure relates to the field of communication technology, in particular to an uplink data transmission method and an uplink data transmission apparatus.

### BACKGROUND

In related arts, a network supports performing an advance indication for a terminal, that is, the network is indicated, during the random access stage, that the terminal is a reduced capability (RedCap) terminal, and the network allocates resources according to a capacity of the terminal.

In a case where there is no advance indication for the terminal, the network is unware of a transmission capacity of the terminal before obtaining the capacity of the terminal, As a result, it is likely that the uplink transmission resource allocated to the terminal will exceed the capacity of the terminal. Therefore, when the uplink transmission resource allocated to the terminal is greater than the capacity of the terminal, how to clarify a transmission behavior of the terminal is a problem to be solved urgently.

### SUMMARY

According to a first aspect of embodiments of the disclosure, an uplink data transmission method is provided. The method is performed by a terminal, and includes:
in response to a first transmission resource allocated to the terminal for transmitting uplink data exceeding a transmission capacity of the terminal, abandoning transmission of the uplink data, and/or, transmitting a first signal using the first transmission resource;
in which the first signal is configured to indicate that the first transmission resource allocated by a network device exceeds the transmission capacity of the terminal, and/or indicate the transmission capacity of the terminal.

In an implementation, transmitting the first signal using the first transmission resource, includes:
transmitting the first signal using a partial transmission resource within the first transmission resource.

In an implementation, transmitting the first signal using the partial transmission resource within the first transmission resource, includes:
determining, according to a predetermined rule, the partial transmission resource within the first transmission resource for transmitting the first signal; and
transmitting the first signal via the partial transmission resource.

In an implementation, the partial transmission resource includes any one of:
a physical resource block (PRB) with a largest index in the first transmission resource; and
a PRB with a smallest index in the first transmission resource.

In an implementation, the method furtherer includes:
receiving a second transmission resource sent by the network device, in which the second transmission resource is a transmission resource re-allocated by the network device to the terminal within a range of the transmission capacity of the terminal; and
performing the transmission of the uplink data based on the second transmission resource.

According to a second aspect of embodiments of the disclosure, an uplink data transmission method is provided. The method is performed by a network device, and includes:
receiving a first signal sent by a terminal, in which the first signal is configured to indicate that a first transmission resource allocated by the network device exceeds a transmission capacity of the terminal, and/or indicate the transmission capacity of the terminal.

In an implementation, receiving the first signal sent by the terminal, includes:
receiving the first signal transmitted by the terminal using a partial transmission resource within the first transmission resource, in which the first transmission resource is a transmission resource allocated by the network device, without knowing a type of the terminal, to the terminal for transmitting the uplink data.

In an implementation, the partial transmission resource includes any one of:
a PRB with a largest index in the first transmission resource; and
a PRB with a smallest index in the first transmission resource.

In an implementation, the method further includes:
sending a second transmission resource to the terminal, in which the second transmission resource is a transmission resource re-allocated by the network device to the terminal within a range of the transmission capacity of the terminal.

According to a third aspect of embodiments of the disclosure, an uplink data transmission method is provided. The method is performed by a terminal, and includes:
in response to a first transmission resource allocated to the terminal for transmitting uplink data exceeding a transmission capacity of the terminal, performing transmission of the uplink data.

In an implementation, in response to the first transmission resource allocated to the terminal for transmitting the uplink data exceeding the transmission capacity of the terminal, performing the transmission of the uplink data, sending the uplink data, includes:
in response to that the first transmission resource exceeds the transmission capacity of the terminal and is greater than a first threshold, abandoning the transmission of the uplink data;
in which the first threshold is great than a maximum transmission capacity of the terminal.

In an implementation, performing the transmission of the uplink data, includes:
performing rate matching on the uplink data according to the first transmission resource;
mapping the uplink data subjected to the rate matching to a first resource within the transmission capacity of the terminal for the transmission.

In an implementation, sending the uplink data, includes:
performing rate matching on the uplink data according to the maximum transmission capacity of the terminal; and
mapping the uplink data after the rate matching to a first resource within the transmission capacity of the terminal for transmission.

In an implementation, the first resource is any one of:
first m PRBs with smallest PRB indexes in the first transmission resource, first m PRBs with largest PRB indexes in the first transmission resource, and m PRBs extracted from the first transmission resource according to a predetermined rule, in which the m PRBs represent a resource quantity determined according to the transmission capacity of the terminal.

In an implementation, the first resource is a partial transmission resource within the first transmission resource indicated by the network device via a signaling.

According to a fourth aspect of embodiments of the disclosure, an uplink data transmission apparatus is provided. The apparatus is configured in a terminal, and includes:
a processing module, configured to, in response to a first transmission resource allocated to the terminal for transmitting uplink data exceeding a transmission capacity of the terminal, abandon transmission of the uplink data, and/or, transmitting a first signal using the first transmission resource.

In an implementation, the processing module is further configured to:
transmit the first signal using a partial transmission resource within the first transmission resource.

In an implementation, the processing module is further configured to:
determine, according to a predetermined rule, the partial transmission resource within the first transmission resource for transmitting the first signal; and
transmit the first signal via the partial transmission resource.

In an implementation, the partial transmission resource includes any one of:
a PRB with a largest index in the first transmission resource; and
a PRB with a smallest index in the first transmission resource.

In an implementation, the apparatus further includes:
a receiving module, configured to receive a second transmission resource sent by the network device, in which the second transmission resource is a transmission resource re-allocated by the network device to the terminal within a range of the transmission capacity of the terminal; and
the processing module, further configured to perform the transmission of the uplink data based on the second transmission resource.

According to a fifth aspect of embodiments of the disclosure, an uplink data transmission apparatus is provided. The apparatus is configured in a network device, and includes:
a receiving module, configured to receive a first signal sent by a terminal, in which the first signal is configured to indicate that a first transmission resource allocated by the network device exceeds a transmission capacity of the terminal, and/or indicate the transmission capacity of the terminal.

In an implementation, the receiving module is further configured to:
receive the first signal sent by the terminal using a partial transmission resource within the first transmission resource, in which the first transmission resource is a transmission resource allocated by the network device, without knowing a type of the terminal, to the terminal for transmitting the uplink data.

In an implementation, the partial transmission resource includes any one of:
a PRB with a largest index in the first transmission resource; and
a PRB with a smallest index in the first transmission resource.

In an implementation, the apparatus further includes:
a sending module, configured to send a second transmission resource to the terminal, in which the second transmission resource is a transmission resource re-allocated by the network device to the terminal within a range of the transmission capacity of the terminal.

According to a sixth aspect of embodiments of the disclosure, an uplink data transmission apparatus is provided. The apparatus is configured in a terminal, and includes:
a sending module, configured to, in response to a first transmission resource allocated to the terminal for transmitting uplink data exceeding a transmission capacity of the terminal, perform transmission of the uplink data.

In an implementation, the sending module is further configured to: in response to that the first transmission resource exceeds the transmission capacity of the terminal and is greater than a first threshold, abandon the transmission of the uplink data;
in which the first threshold is great than a maximum transmission capacity of the terminal.

In an implementation, the sending module is further configured to: in response to that the first transmission resource exceeds the transmission capacity of the terminal and is less than a first threshold, perform the transmission of the uplink data;
in which the first threshold is great than a maximum transmission capacity of the terminal.

In an implementation, the sending module is further configured to:
perform rate matching on the uplink data according to the first transmission resource; and
map the uplink data subjected to the rate matching to a first resource within the transmission capacity of the terminal for the transmission, and drop uplink data subjected to the rate matching that causes exceeding of a capacity range of the terminal.

In an implementation, the sending module is further configured to:
perform rate matching on the uplink data according to the maximum transmission capacity of the terminal; and
map the uplink data subjected to the rate matching to a first resource within the transmission capacity of the terminal for the transmission.

In an implementation, the first resource is any one of:
first m PRBs with smallest PRB indexes in the first transmission resource, first m PRBs with largest PRB indexes in the first transmission resource, and m PRBs extracted from the first transmission resource according to a predetermined rule, wherein the m PRBs represent a resource quantity determined according to the transmission capacity of the terminal.

In an implementation, the first resource is a partial transmission resource within the first transmission resource indicated by the network device via a signaling.

According to a seventh aspect of embodiments of the disclosure, a computer readable storage medium is provided. The computer readable storage medium is configured to store instructions usable by the above uplink data transmission apparatus. When the instructions are executed, the above uplink data transmission apparatus is caused to perform the method of the first aspect, the method of the second aspect or the method of the third aspect, respectively.

According to an eighth aspect of embodiments of the disclosure, a computer program product including computer programs is provided. When a computer runs the computer programs, the computer is caused to perform the method of the first aspect, the method of the second aspect or the method of the third aspect.

According to a ninth aspect of embodiments of the disclosure, a chip system is provided. The chip system includes at least one processor and an interface for supporting the communication apparatus in realizing the functions involved in the first aspect, the second aspect or the third aspect, e.g., determining or processing at least one of data or information involved in the methods described above. In a possible design, the chip system further includes a memory. The memory is configured to store necessary computer programs and data of the communication apparatus. The chip system may consist of chips or may include a chip and other discrete components.

According to a tenth aspect of embodiments of the disclosure, a computer program is provided. When a computer runs the computer program, the computer is caused to perform the method of the first aspect, the method of the second aspect or the method of the third aspect.

According to the uplink data transmission method and apparatus provided by the embodiments of the disclosure, in response to that the first transmission resource allocated to the terminal for sending the uplink data exceeds the transmission capacity of the terminal, the terminal abandons the transmission of the uplink data, and/or sends the first signal using the first transmission resource or sends the uplink data. The first signal is configured to indicate that the first transmission resource allocated by the network device exceeds the transmission capacity of the terminal, and/or indicate the transmission capacity of the terminal, which clarifies a transmission behavior of the terminal.

### BRIEF DESCRIPTION OF THE DRAWINGS

In order to more clearly illustrate the technical solutions in the embodiments of the disclosure or background technology, the accompanying drawings required for the embodiments of the disclosure or the background technology will be described below.
FIG. 1 is a schematic diagram of a communication system according to an embodiment of the disclosure.
FIG. 2 is a flowchart of an uplink data transmission method according to an embodiment of the disclosure.
FIG. 3 is a flowchart of an uplink data transmission method according to another embodiment of the disclosure.
FIG. 4 is a flowchart of an uplink data transmission method according to yet another embodiment of the disclosure.
FIG. 5 is a flowchart of an uplink data transmission method according to further another embodiment of the disclosure.
FIG. 6 is a flowchart of an uplink data transmission method according to further another embodiment of the disclosure.
FIG. 7 is a flowchart of an uplink data transmission method according to further another embodiment of the disclosure.
FIG. 8 is a flowchart of an uplink data transmission method according to further another embodiment of the disclosure.
FIG. 9 is a flowchart of an uplink data transmission method according to further another embodiment of the disclosure.
FIG. 10 is a flowchart of an uplink data transmission method according to further another embodiment of the disclosure.
FIG. 11 is a flowchart of an uplink data transmission method according to further another embodiment of the disclosure.
FIG. 12 is a flowchart of an uplink data transmission method according to further another embodiment of the disclosure.
FIG. 13 is a flowchart of an uplink data transmission method according to further another embodiment of the disclosure.
FIG. 14 is a flowchart of an uplink data transmission method according to further another embodiment of the disclosure.
FIG. 15 is a schematic diagram of an uplink data transmission apparatus according to an embodiment of the disclosure.
FIG. 16 is a schematic diagram of an uplink data transmission apparatus according to another embodiment of the disclosure.
FIG. 17 is a schematic diagram of an uplink data transmission apparatus according to yet another embodiment of the disclosure.
FIG. 18 is a schematic diagram of a communication apparatus according to an embodiment of the disclosure.
FIG. 19 is a schematic diagram of a chip according to an embodiment of the disclosure.

### DETAILED DESCRIPTION

In order to better understand an uplink data transmission method disclosed by embodiments of the disclosure, a communication system to which the embodiments of the disclosure are applied will be described first.

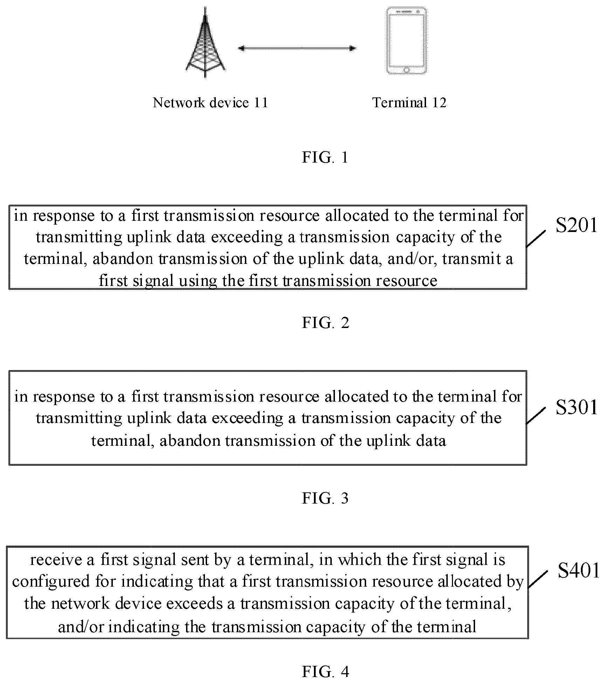

As illustrated in FIG. 1, FIG. 1 is a schematic diagram of a communication system according to an embodiment of the disclosure. The communication system includes, but is not limited to, one network device and one terminal. The number and form of devices in FIG. 1 are illustrated only as examples and do not constitute a limitation on the embodiments of the disclosure. In practical applications, two or more network devices and two or more terminals may be included in the communication system. For illustration, FIG. 1 shows a communication system includes one network device 11 and one terminal 12.

It is noteworthy that the technical solutions of the embodiments of the disclosure may be applied to various communication systems, such as, a long term evolution (LTE) system, a 5th generation (5G) mobile communication system, a 5G new radio (NR) system, or other future new mobile communication systems.

The network device 11 in the embodiments of the disclosure is an entity on a network side for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. The specific technology and specific device form adopted by the network device are not limited in the embodiments of the disclosure. The network device in the embodiments of the disclosure may be composed of a central unit (CU) and a distributed unit (DU). The CU may also be called a control unit. The use of CU-DU structure allows to divide a protocol layer of the network device, such as a base station, such that some protocol layer functions are placed in the CU for centralized control, and some or all of the remaining protocol layer functions are distributed in the DU, and the DU is centrally controlled by the CU.

The terminal 12 in the embodiments of the disclosure is an entity on a user side for receiving or transmitting signals, such as a mobile phone. The terminal may also be referred to as a terminal, a user equipment (UE), a mobile station (MS), a mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in the embodiments of the disclosure is intended to clearly illustrate the technical solutions of the embodiments of the disclosure, and does not constitute a limitation on the technical solutions provided by the embodiments of the disclosure. It is understandable by those skilled in the art that with the evolution of system architectures and the emergence of new service scenarios, the technical solutions provided by the embodiments of the disclosure are also applicable to similar technical problems.

In related arts, a network supports performing an advance indication for a terminal, that is, the network is indicated, during the random access stage, that the terminal is a reduced capability (RedCap) terminal, and the network allocates resources according to a capacity of the terminal.

In a case where there is no advance indication for the terminal, the network is unware of a transmission capacity of the terminal before obtaining the capacity of the terminal. As a result, it is likely that the uplink transmission resource allocated to the terminal will exceed the capacity of the terminal. Therefore, when the uplink transmission resource allocated to the terminal is greater than the capacity of the terminal, how to clarify a transmission behavior of the terminal is a problem to be solved urgently.

FIG. 2 is a flowchart of an uplink data transmission method according to an embodiment of the disclosure. The method is performed by a terminal. As illustrated in FIG. 2, the method includes, but is not limited to, the following steps.

At step S201, in response to a first transmission resource allocated to the terminal for transmitting uplink data exceeding a transmission capacity of the terminal, the terminal abandons transmission of the uplink data, and/or, the terminal transmits a first signal using the first transmission resource.

The first signal is configured to indicate that the first transmission resource allocated by a network device exceeds the transmission capacity of the terminal, and/or indicate the transmission capacity of the terminal.

As an example, the first transmission resource allocated by the network device to the terminal for transmitting the uplink data includes at least one of: a bandwidth, a time domain or a frequency domain, which is not specifically limited in the embodiments of the disclosure.

After receiving the first transmission resource of the uplink data transmitted by the network device, the terminal matches the transmission capacity of the terminal with the first transmission resource, and abandons the transmission of the uplink data in a case where it is determined that the first transmission resource for transmitting the uplink data exceeds the transmission capacity of the terminal; and/or

the terminal feeds back the first signal to the network device based on the first transmission resource. The first signal is configured to indicate that the first transmission resource allocated by the network device exceeds the transmission capacity of the terminal, and/or indicate the transmission capacity of the terminal, so that the network device may re-allocate, according to the first signal, a transmission resource for transmitting the uplink data.

In the embodiment of the disclosure, there is no need for the terminal to send a terminal capability or the transmission capability of the terminal to the network device. Instead, the network device directly allocates the first transmission resource to the terminal for transmitting the uplink data, thereby reducing resource waste caused by the terminal sending the terminal capability or the transmission capability of the terminal.

In response to the first transmission resource allocated to the terminal for transmitting the uplink data exceeding the transmission capacity of the terminal, the terminal abandons the transmission of the uplink data, and/or, transmits the first signal using the first transmission resource. The first signal is configured to indicate that the first transmission resource allocated by the network device exceeds the transmission capacity of the terminal, and/or indicate the transmission capacity of the terminal. In this way, an uplink data transmission behavior of the terminal is clarified after it is determined that the first transmission resource for transmitting the uplink data exceeds the transmission capacity of the terminal.

FIG. 3 illustrates a feasible implementation of the embodiments of the disclosure, and FIG. 3 is a flowchart of an uplink data transmission method according to an embodiment of the disclosure. The method is performed by a terminal. As illustrated in FIG. 3, the method includes, but is not limited to, the following steps.

At step S301, in response to a first transmission resource allocated to the terminal for transmitting uplink data exceeding a transmission capacity of the terminal, the terminal abandons transmission of the uplink data.

As an example, the first transmission resource allocated by the network device to the terminal for transmitting the uplink data includes at least one of: a bandwidth, a time domain or a frequency domain, which is not specifically limited in the embodiment of the disclosure.

In the embodiment of the disclosure, there is no need for the terminal to send a terminal capability or the transmission capability of the terminal to the network device. Instead, the network device directly allocates the first transmission resource to the terminal for transmitting the uplink data, thereby reducing resource waste caused by the terminal sending the terminal capability or the transmission capability of the terminal.

After receiving the first transmission resource of the uplink data transmitted by the network device, the terminal matches the transmission capacity of the terminal with the first transmission resource, and abandons the transmission of the uplink data in a case where it is determined that the first transmission resource for transmitting the uplink data exceeds the transmission capacity of the terminal.

As a feasible implementation of the embodiments of the disclosure, the network device may allocate, according to a type of the terminal, the corresponding transmission resource to the terminal for transmitting the uplink data.

In response to that the first transmission resource allocated to the terminal for transmitting the uplink data exceeding the transmission capacity of the terminal, the terminal abandons the transmission of the uplink data. It clarifies that after determining that the first transmission resource for transmitting the uplink data exceeds the transmission capacity of terminal, the transmission of the uplink data is abandoned, thereby clarifying a transmission behavior of the terminal.

FIG. 4 is a flowchart of an uplink data transmission method according to an embodiment of the disclosure. The method is performed by a network device. As illustrated in FIG. 4, the method includes, but is not limited to, the following steps.

At step S401, a first signal sent by a terminal is received, in which the first signal is configured to indicate that a first transmission resource allocated by the network device exceeds a transmission capacity of the terminal, and/or indicate the transmission capacity of the terminal.

In the embodiments of the disclosure, the network device sends the first transmission resource to the terminal for transmitting the uplink data. The terminal receives the first transmission resource, and determines that the first transmission resource for transmitting the uplink data exceeds the transmission capacity of the terminal, and/or, determines to indicate the transmission capacity of the terminal. The terminal then feeds back the first signal to the network device based on the first transmission resource. The network device receives the first signal sent by the terminal.

Although the terminal feeds back the first signal to the network device, it occupies relatively fewer resources compared to a scenario where the terminal sends its capability or the transmission capability of the terminal to the network device before receiving the first transmission resource,.

As an example, the first transmission resource allocated by the network device to the terminal for transmitting the uplink data includes at least one of: a bandwidth, a time domain or a frequency domain, which is not specifically limited in the embodiment of the disclosure.

The network device allocates the first transmission resource to the terminal for transmitting the uplink data. In response to that the first transmission resource allocated to the terminal for transmitting the uplink data exceeds the transmission capacity of the terminal, the terminal transmits the first signal using the first transmission resource. The first signal is configured to indicate that the first transmission resource allocated by the network device exceeds the transmission capacity of the terminal, and/or indicate the transmission capacity of the terminal. It clarifies that after determining that the first transmission resource for transmitting the uplink data exceeds the transmission capacity of terminal, the terminal transmits the first signal to the network device using the first transmission resource, so that the network device may re-allocate, based on the first signal, a first transmission resource to the terminal for transmitting the uplink data, thereby clarifying a transmission behavior of the terminal.

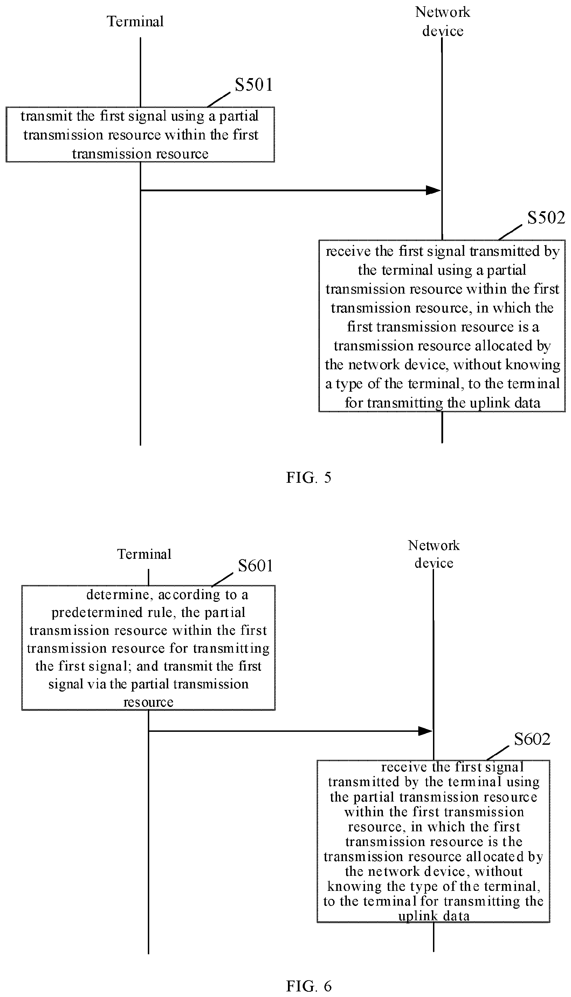

FIG. 5 is a flowchart of an uplink data transmission method according to an embodiment of the disclosure. The method is applied to an interaction process between a terminal and a network device. As illustrated in FIG. 5, the method includes, but is not limited to, the following steps.

At step S501, in response to a first transmission resource allocated to the terminal for transmitting uplink data exceeding a transmission capacity of the terminal, the terminal transmits a first signal using a partial transmission resource within the first transmission resource.

As a feasible implementation of the embodiments of the disclosure, the network device may allocate, according to a type of the terminal, a corresponding transmission resource to the terminal for transmitting the uplink data. The network device sends the first transmission resource to the terminal for transmitting the uplink data, in which the first transmission resource is a transmission resource allocated by the network device, without knowing the type of the terminal, to the terminal for transmitting the uplink data. The terminal receives the first transmission resource, and determines that the first transmission resource for transmitting the uplink data exceeds the transmission capacity of the terminal, and/or, determines to indicate the transmission capacity of the terminal. The terminal then feeds back the first signal to the network device based on the partial transmission resource within the first transmission resource.

As a feasible implementation of the embodiment of the disclosure, the partial transmission resource includes any one of: a physical resource block (PRB) with the largest index in the first transmission resource, and a PRB with the smallest index in the first transmission resource. In the embodiments of the disclosure, the largest PRB and the smallest PRB are relative concepts, which refer to a relatively largest PRB and a relatively smallest PRB in the first transmission resource. The specific sizes of the largest PRB and the smallest PRB are not limited in the embodiments of the disclosure.

The usage of remaining resources within the first transmission resource of the terminal is not limited or explained in the embodiments of the disclosure.

At step S502, the network device receives the first signal transmitted by the terminal using the partial transmission resource within the first transmission resource, in which the first transmission resource is the transmission resource allocated by the network device, without knowing the type of the terminal, to the terminal for transmitting the uplink data .

The network device allocates the first transmission resource to the terminal for transmitting the uplink data. In response to that the first transmission resource allocated to the terminal for transmitting the uplink data exceeds the transmission capacity of the terminal, the terminal transmits the first signal using the partial transmission resource within the first transmission resource. The first signal is configured to indicate that the first transmission resource allocated by the network device exceeds the transmission capacity of the terminal, and/or indicate the transmission capacity of the terminal. It clarifies that after determining that the first transmission resource for transmitting the uplink data exceeds the transmission capacity of terminal, the terminal transmits the first signal to the network device using the partial transmission resource within the first transmission resource, so that the network device may re-allocate, based on the first signal, a first transmission resource to the terminal for transmitting the uplink data, thereby clarifying a transmission behavior of the terminal.

FIG. 6 is a flowchart of an uplink data transmission method according to an embodiment of the disclosure. As illustrated in FIG. 6, the method includes, but is not limited to, the following steps.

At step S601, in response to a first transmission resource allocated to a terminal for transmitting uplink data exceeding a transmission capacity of the terminal, the terminal determines, according to a predetermined rule, a partial transmission resource within the first transmission resource for transmitting a first signal, and transmits the first signal via the partial transmission resource.

As a feasible implementation of the embodiments of the disclosure, the network device may allocate, according to a type of the terminal, a corresponding transmission resource to the terminal for transmitting the uplink data. The network device sends the first transmission resource to the terminal for transmitting the uplink data, in which the first transmission resource is a transmission resource allocated by the network device, without knowing the type of the terminal, to the terminal for transmitting the uplink data.

After receiving the first transmission resource, and determining that the first transmission resource for transmitting the uplink data exceeds the transmission capacity of the terminal, the terminal determines, according to the predetermined rule, the partial transmission resource within the first transmission resource for transmitting the first signal, and then transmits the first signal via the partial transmission resource.

As a feasible implementation of the embodiments of the disclosure, the partial transmission resource includes any one of: a PRB with the largest index in the first transmission resource, and a PRB with the smallest index in the first transmission resource. The descriptions of the largest PRB and the smallest PRB may be referred to the detailed descriptions in the above embodiments, which will not be repeated here.

The usage of remaining resources within the first transmission resource of the terminal is not limited or explained in the embodiments of the disclosure.

At step S602, the network device receives the first signal transmitted by the terminal using the partial transmission resource within the first transmission resource, in which the first transmission resource is the transmission resource allocated by the network device, without knowing the type of the terminal, to the terminal for transmitting the uplink data
The network device allocates the first transmission resource to the terminal for transmitting the uplink data. In response to that the first transmission resource allocated to the terminal for transmitting the uplink data exceeds the transmission capacity of the terminal, the terminal determines, according to the predetermined rule, the partial transmission resource within the first transmission resource for transmitting the first signal, and transmits the first signal to the network device via the partial transmission resource. The first signal is configured to indicate that the first transmission resource allocated by the network device exceeds the transmission capacity of the terminal, and/or indicate the transmission capacity of the terminal. It clarifies that after determining that the first transmission resource for transmitting the uplink data exceeds the transmission capacity of the terminal, the first signal is transmitted to the network device using the partial transmission resource within the first transmission resource which is determined according to the predetermined rule, so that the network device may re-allocate, based on the first signal, a first transmission resource to the terminal for transmitting the uplink data, which clarifies a transmission behavior of the terminal.

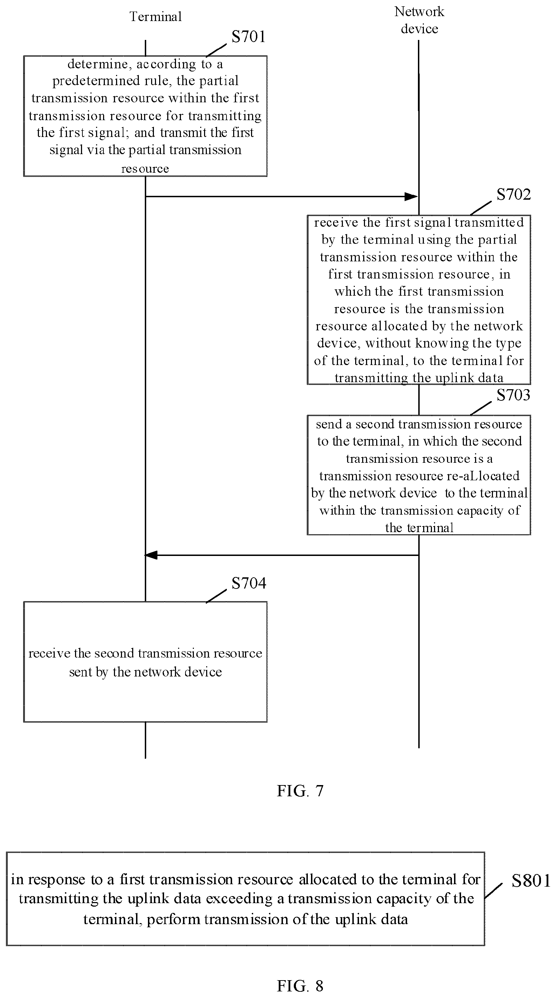

FIG. 7 is a flowchart of an uplink data transmission method according to an embodiment of the disclosure. As illustrated in FIG. 7, the method includes, but is not limited to, the following steps.

At step S701, in response to a first transmission resource allocated to a terminal for transmitting uplink data exceeding a transmission capacity of the terminal, the terminal determines, according to a predetermined rule, a partial transmission resource within the first transmission resource for transmitting a first signal, and transmits the first signal via the partial transmission resource.

As a feasible implementation of the embodiments of the disclosure, the network device may allocate, according to a type of the terminal, a corresponding transmission resource to the terminal for transmitting the uplink data. The network device sends the first transmission resource to the terminal for transmitting the uplink data, in which the first transmission resource is a transmission resource allocated by the network device, without knowing the type of the terminal, to the terminal for transmitting the uplink data.

After receiving the first transmission resource, and determining that the first transmission resource for transmitting the uplink data exceeds the transmission capacity of the terminal, the terminal determines, according to the predetermined rule, the partial transmission resource within the first transmission resource for transmitting the first signal, and then transmits the first signal via the partial transmission resource.

As a feasible implementation of the embodiments of the disclosure, the partial transmission resource includes any one of: a PRB with the largest index in the first transmission resource, and a PRB with the smallest index in the first transmission resource.

The usage of remaining resources within the first transmission resource of the terminal is not limited or explained in the embodiments of the disclosure.

At step S702, the network device receives the first signal sent by the terminal using the part of the first transmission resource, in which the first transmission resource is a transmission resource allocated to the terminal by the network device for sending the uplink data without knowing a type of the terminal.

The network device allocates the first transmission resource to the terminal for transmitting the uplink data. In response to that the first transmission resource allocated to the terminal for transmitting the uplink data exceeds the transmission capacity of the terminal, the terminal determines, according to the predetermined rule, the partial transmission resource within the first transmission resource for transmitting the first signal, and transmits the first signal to the network device via the partial transmission resource. The first signal is configured to indicate that the first transmission resource allocated by the network device exceeds the transmission capacity of the terminal, and/or indicate the transmission capacity of the terminal. It clarifies that after determining that the first transmission resource for transmitting the uplink data exceeds the transmission capacity of the terminal, the first signal is transmitted to the network device using the partial transmission resource within the first transmission resource which is determined according to the predetermined rule, so that the network device may re-allocate, based on the first signal, a first transmission resource to the terminal for transmitting the uplink data, which clarifies a transmission behavior of the terminal.

At step S703, the network device sends a second transmission resource to the terminal, in which the second transmission resource is a transmission resource, within a range of the transmission capacity of the terminal, re-allocated by the network device to the terminal.

The network device conducts detection on the corresponding uplink transmission resource. When the network device detects the first signal sent by the terminal, the network device may trigger a re-transmission of a transmission resource, and scheduling information is a transmission resource allocated to the terminal within a capacity range of the terminal. That is, the network device triggers the allocation of the second transmission resource within a range ofthe transmission capacity of the terminal to the terminal.

It is noted that the first transmission resource is allocated to the terminal for transmitting the uplink data without knowing the type of the terminal, while the second transmission resource is allocated according to a terminal transmission capacity of the terminal and/or an indicated transmission capacity of the terminal. That is, the second transmission resource is re-allocated according to a capacity range of the terminal.

The first transmission resource and the second transmission resource are both transmission resources in essence. The use of "first" and "second" is to distinguish different timings at which the network device allocates the transmission resources, rather than to imply other meanings.

At step S704, the terminal receives the second transmission resource sent by the network device.

The network device allocates the first transmission resource to the terminal for transmitting the uplink data. In response to that the first transmission resource allocated to the terminal for transmitting the uplink data exceeds the transmission capacity of the terminal, the terminal determines, according to the predetermined rule, the partial transmission resource within the range of the first transmission resource for transmitting the first signal, and transmits the first signal to the network device via the partial transmission resource. The network device may re-allocate, according to the received first signal, the second transmission resource within the transmission capacity of the terminal to the terminal. It clarifies that after determining that the first transmission resource for transmitting the uplink data exceeds the transmission capacity of the terminal, the first signal is transmitted to the network device using the partial transmission resource within the first transmission resource which is determined according to the predetermined rule, so that the network device may re-allocate, based on the first signal, the second transmission resource to the terminal for transmitting the uplink data, which clarifies a transmission behavior of the terminal.

FIG. 8 is a flowchart of an uplink data transmission method according to an embodiment of the disclosure. The method is performed by a terminal. As illustrated in FIG. 8, the method includes, but is not limited to, the following steps.

At step S801, in response to a first transmission resource allocated to the terminal for transmitting the uplink data exceeding a transmission capacity of the terminal, transmission of the uplink data is performed.

After receiving the first transmission resource of the uplink data transmitted by the network device, although the first transmission resource exceeds a maximum transmission capacity of the terminal, the terminal still performs the transmission of the uplink data.

In response to that the first transmission resource allocated to the terminal for transmitting the uplink data exceeds the transmission capacity of the terminal, the terminal performs the transmission of the uplink data according to the first transmission resource, that is, a transmission behavior of the terminal is clarified according to the actual first transmission resource.

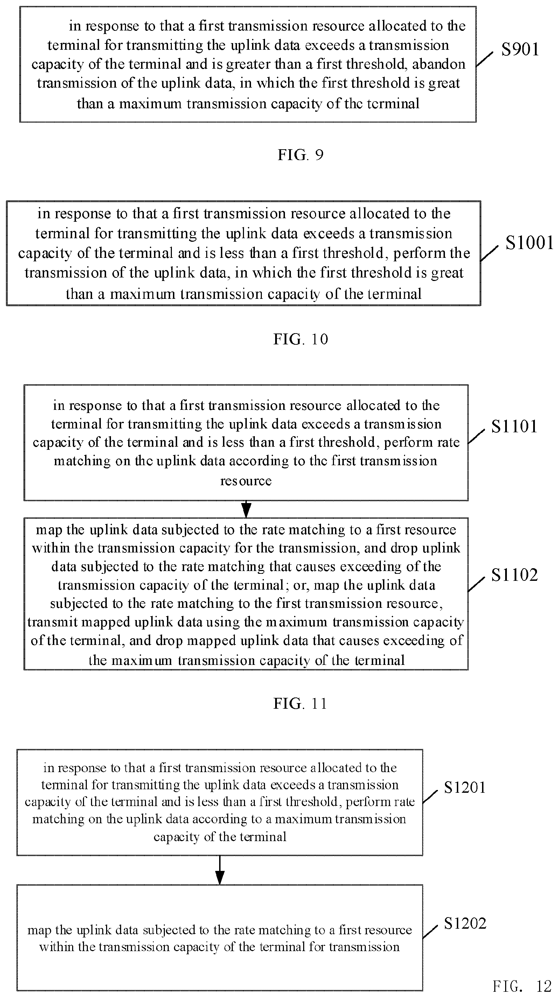

FIG. 9 is a flowchart of an uplink data transmission method according to an embodiment of the disclosure. The method is performed by a terminal. As illustrated in FIG. 9, the method includes, but is not limited to, the following steps.

At step S901, in response to that a first transmission resource allocated to the terminal for transmitting uplink data exceeds a transmission capacity of the terminal and is greater than a first threshold, transmission of the uplink data is abandoned, in which the first threshold is great than a maximum transmission capacity of the terminal.

As an example, the first transmission resource allocated by the network device to the terminal for transmitting the uplink data includes at least one of: a bandwidth, a time domain or a frequency domain, which is not specifically limited in the embodiment of the disclosure.

In the embodiments of the disclosure, there is no need for the terminal to send a terminal capability or the transmission capability of the terminal to the network device. Instead, the network device directly allocates the first transmission resource to the terminal for transmitting the uplink data, thereby reducing resource waste caused by the terminal sending the terminal capability and/or the transmission capability of the terminal..

After receiving the first transmission resource of the uplink data transmitted by the network device, the terminal matches the transmission capacity of the terminal with the first transmission resource. After determining that the first transmission resource for transmitting the uplink data exceeds the transmission capacity of the terminal and is greater than the first threshold, the transmission of the uplink data is abandoned. That is, after determining that the first transmission resource for transmitting the uplink data exceeds the transmission capacity of the terminal and is greater than the maximum transmission capacity of the terminal, the transmission of the uplink data is abandoned.

In the embodiments of the disclosure, the first threshold is related to an error correction capability of uplink data transmission, and may also relate to a hardware configuration of the terminal itself under a certain transmission mechanism and the maximum transmission capability. Due to the different hardware configurations of different terminals, the settings of the first threshold and the maximum transmission capability may vary with the differences in the hardware configurations. Alternatively, the settings of the first threshold and the maximum transmission capability may not vary with the differences in the hardware configurations. That is, although the hardware configurations are different, both the first threshold and the maximum transmission capability remain the same, which is not specifically limited herein.

As a feasible implementation of the embodiments of the disclosure, the network device allocates, according to the type (or the hardware configuration) of the terminal, the corresponding first transmission resource to the terminal for transmitting the uplink data.

In response to that the first transmission resource allocated to the terminal for transmitting the uplink data exceeds the transmission capacity of the terminal and is greater than the maximum transmission capacity of the terminal, the terminal abandons the transmission of the uplink data. It clarifies that after determining that the first transmission resource for transmitting the uplink data exceeds the transmission capacity of terminal and is greater than the maximum transmission capacity of the terminal, the terminal abandons the transmission of the uplink data, which clarifies a transmission behavior of the terminal.

FIG. 10 is a flowchart of an uplink data transmission method according to an embodiment of the disclosure. The method is performed by a terminal. As illustrated in FIG. 10, the method includes, but is not limited to, the following steps.

At step S1001, in response to that a first transmission resource allocated to the terminal for transmitting uplink data exceeds a transmission capacity of the terminal and is less than a first threshold, transmission of the uplink data is performed, in which the first threshold is great than a maximum transmission capacity of the terminal.

After receiving the first transmission resource of the uplink data transmitted by the network device, the terminal matches the transmission capacity of the terminal with the first transmission resource. After determining that the first transmission resource for transmitting the uplink data exceeds the transmission capacity of the terminal and is less than the first threshold, the transmission of the uplink data is performed. That is, when it is determined that the first transmission resource for transmitting the uplink data exceeds the transmission capacity of the terminal, but the exceeded range is still within a range where the data transmission is able to error-corrected, the transmission of the uplink data is performed.

In response to that the first transmission resource allocated to the terminal for transmitting the uplink data exceeds the transmission capacity of the terminal and is less than the first threshold, the terminal performs the transmission of the uplink data. That is, according to a magnitude relationship between the first transmission resource and the maximum transmission capacity of the terminal, a transmission behavior of the terminal is clarified.

FIG. 11 is a flowchart of an uplink data transmission method according to an embodiment of the disclosure. The method is performed by a terminal. As illustrated in FIG. 11, the method includes, but is not limited to, the following steps.

At step S1101, in response to that a first transmission resource allocated to the terminal for transmitting the uplink data exceeds a transmission capacity of the terminal and is less than a first threshold, rate matching is performed on the uplink data according to the first transmission resource.

The terminal performs the rate matching on the transmitted uplink data according to the actually allocated first transmission resource.

At step S1102, the uplink data subjected to the rate matching is mapped to a first resource within the transmission capacity of the terminal for transmission, and uplink data subjected to the rate matching that causes exceeding of a capacity range of the terminal is dropped; or, the uplink data subjected to the rate matching is mapped to the first transmission resource, mapped uplink data is transmitted using the maximum transmission capacity of the terminal, and mapped uplink data that causes exceeding of the maximum transmission capacity of the terminal is dropped.

After receiving the first transmission resource of the uplink data transmitted by the network device, the terminal matches the transmission capacity of the terminal with the first transmission resource. After determining that the first transmission resource for transmitting the uplink data exceeds the transmission capacity of the terminal and is less than the first threshold, the transmission of the uplink data is performed.

As a feasible implementation of the embodiments of the disclosure, the terminal performs the rate matching on the transmitted uplink data according to the actually allocated first transmission resource. The terminal maps, during a resource mapping, the uplink data after the rate matching performed according to the actually allocated first transmission resource to the first resource within the transmission capacity of the terminal. Because the actually allocated first transmission resource exceeds the maximum transmission capacity of the terminal, when performing the mapping, part of the uplink data subjected to the rate matching cannot be mapped within the transmission capacity of the terminal, and the uplink data subjected to the rate matching that causes exceeding of the capacity range of the terminal will be dropped.

As a feasible implementation of the embodiments of the disclosure, the terminal performs the rate matching on the transmitted uplink data according to the actually allocated first transmission resource. During a resource mapping, the terminal maps the uplink data subjected to the rate matching to the first transmission resource, and drops part of the uplink data whose rate does not match to the first transmission resource. The mapped uplink data is transmitted using the maximum transmission capacity of the terminal, and the mapped uplink data that causes exceeding of the maximum transmission capacity of the terminal is dropped.

As an example, the first resource is a partial transmission resource within the first transmission resource indicated by the network device via a signaling. The first resource is any one of: first m PRBs with smallest PRB indexes in the first transmission resource, first m PRBs with largest PRB indexes in the first transmission resource, and m PRBs extracted from the first transmission resource according to a predetermined rule. The m PRBs represent a resource quantity determined according to the transmission capacity of the terminal.

The first smallest m PRBs and the first largest m PRBs are relative concepts, which refers to relative largest PRBs and relative smallest PRBs in the first transmission resource. The specific sizes of the largest PRB and the smallest PRB are not limited in the embodiments of the disclosure.

In detail, m is a positive number greater than 1, the specific value of m is not limited in the embodiments of the disclosure.

As an example, the predetermined rule includes, but is not limited to, randomly extracting m PRBs from n PRBs, or extracting one PRB every two PRBs from n PRBs until extracting m PRBs in total, or extracting one PRB every five PRBs from n PRBs until extracting m PRBs in total. The predetermined rule is not limited in the embodiments of the disclosure.

For example, when the first transmission resource is a bandwidth, the terminal performs the rate matching on the transmitted uplink data according to the actually allocated bandwidth. During the resource mapping, the terminal maps the uplink data to the first resource within a bandwidth capacity for the transmission. Because the actually allocated bandwidth exceeds the maximum transmission capacity of the terminal, when performing the resource mapping, part of the uplink data subjected to the rate matching cannot be mapped to the bandwidth capacity, and the uplink data subjected to the rate matching that causes exceeding of a range the bandwidth capacity will be dropped.

In response to that the first transmission resource allocated to the terminal for transmitting the uplink data exceeds the transmission capacity of the terminal and is less than the first threshold, the terminal performs the rate matching on the uplink data according to the actually allocated first transmission resource, then maps the uplink data subjected to the rate matching to the first resource within the transmission capacity of the terminal for the transmission, and drops the uplink data subjected to the rate matching that causes exceeding of a capacity range of the terminal and unable to be mapped to the transmission capacity of the terminal. That is, according to a magnitude relationship between the first transmission resource and the actual transmission capacity of the terminal, a transmission behavior of the terminal is clarified.

FIG. 12 is a flowchart of an uplink data transmission method according to an embodiment of the disclosure. The method is performed by a terminal. As illustrated in FIG. 12, the method includes, but is not limited to, the following steps.

At step S1201, in response to that a first transmission resource allocated to the terminal for transmitting the uplink data exceeds a transmission capacity of the terminal and is less than a first threshold, rate matching is performed on the uplink data according to a maximum transmission capacity of the terminal.

At step S1202, the uplink data subjected to the rate matching is mapped to a first resource within the transmission capacity of the terminal for transmission.

After receiving the first transmission resource of the uplink data transmitted by the network device, the terminal matches a terminal capacity and/or the transmission capacity of the terminal with the first transmission resource. When it is determined that the first transmission resource for transmitting the uplink data exceeds the transmission capacity of the terminal and is less than the first threshold, the terminal performs the transmission of the uplink data.

The terminal performs the rate matching on the transmitted uplink data according to the maximum transmission capacity of the terminal, and maps the uplink data subjected to the rate matching to the first resource within the transmission capacity of the terminal for the transmission. The first resource is a resource corresponding to the maximum transmission capacity of the terminal.

It should be noted that although the first transmission resource allocated by the network device to the terminal exceeds the maximum transmission capacity of the terminal, the actually allocated first transmission resource is not applicable when performing the rate matching on the uplink data. Instead, the rate matching is performed on the transmitted uplink data according to the maximum transmission capacity of the terminal. The uplink data obtained after the rate matching performed based on the maximum transmission capacity of the terminal may be exactly mapped the resource corresponding to the maximum transmission capacity of the terminal during the resource mapping, and there is no situation where the uplink data subjected to the rate matching is dropped.

As an example, the first resource is a partial transmission resource within the first transmission resource indicated by the network device via a signaling. The first resource is any one of: first m PRBs with smallest PRB indexes in the first transmission resource, first m PRBs with largest PRB indexes in the first transmission resource, and m PRBs extracted from the first transmission resource according to a predetermined rule. The m PRBs represent a resource quantity determined according to the transmission capacity of the terminal.

The descriptions of the first smallest m PRBs, the first largest m PRBs and the predetermined rule may be referred to the detailed descriptions in the above embodiments, which will not be repeated here.

For example, when the first transmission resource is a bandwidth, the terminal performs the rate matching on the transmitted uplink data according to the maximum bandwidth, and the terminal maps the uplink data to the first resource within a bandwidth capacity for the transmission.

In response to that the first transmission resource allocated to the terminal for transmitting the uplink data exceeds the transmission capacity of the terminal and is less than the first threshold, the terminal performs the rate matching on the uplink data according to the maximum transmission capacity of the terminal, and then maps the uplink data subjected to the rate matching to the first resource within the transmission capacity of the terminal for the transmission. That is, according to a magnitude relationship between the first transmission resource and the maximum transmission capacity of the terminal, a transmission behavior of the terminal is clarified.

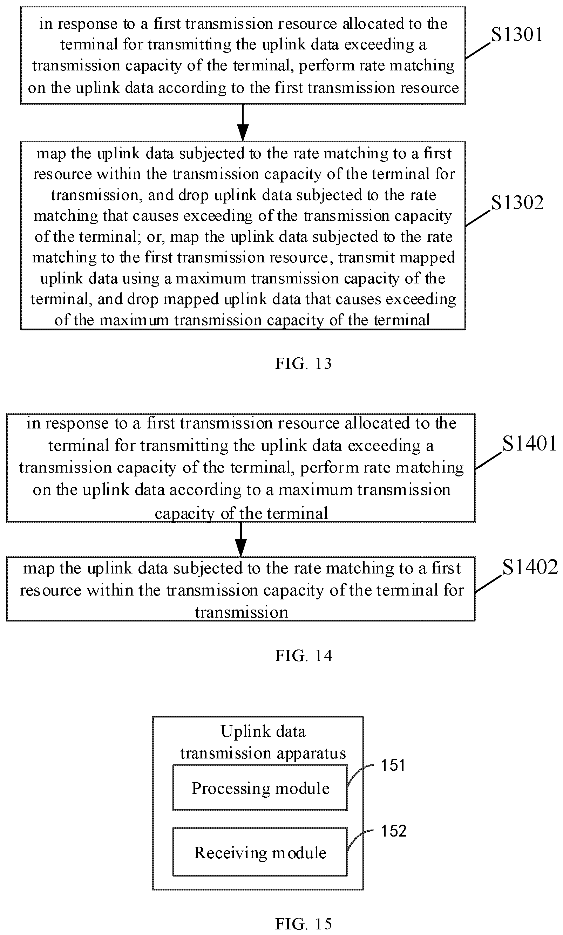

FIG. 13 is a flowchart of an uplink data transmission method according to an embodiment of the disclosure. The method is performed by a terminal. As illustrated in FIG. 13, the method includes, but is not limited to, the following steps.

At step S1301, in response to a first transmission resource allocated to the terminal for transmitting the uplink data exceeding a transmission capacity of the terminal, rate matching is performed on the uplink data according to the first transmission resource.

In the embodiments of the disclosure, it should be noted here that when determining that the first transmission resource allocated by the network device to the terminal for transmitting the uplink data exceeds the transmission capacity of the terminal, the terminal does not make a further judgment on the size of the first transmission resource, i.e., the transmission of the uplink data is performed regardless of whether the first transmission resource exceeds a first threshold.

At step S1302, the uplink data subjected to the rate matching is mapped to a first resource within the transmission capacity of the terminal for transmission, and uplink data subjected to the rate matching that causes exceeding of a capacity range of the terminal is dropped; or, the uplink data subjected to the rate matching is mapped to the first transmission resource, mapped uplink data is transmitted using a maximum transmission capacity of the terminal, and mapped uplink data that causes exceeding of the maximum transmission capacity of the terminal is dropped.

As a feasible implementation of the embodiments of the disclosure, after performing the rate matching on the transmitted uplink data according to the actually allocated first transmission resource, the terminal maps, during a resource mapping, the uplink data after the rate matching performed according to the actually allocated first transmission resource to the first resource within the transmission capacity of the terminal. Because the actually allocated first transmission resource exceeds the maximum transmission capacity of the terminal, when performing the mapping, part of the uplink data subjected to the rate matching cannot be mapped within the transmission capacity of the terminal, and the uplink data subjected to the rate matching that causes exceeding of the capacity range of the terminal will be dropped.

As another feasible implementation of the embodiments of the disclosure, the terminal performs the rate matching on the transmitted uplink data according to the actually allocated first transmission resource. During a resource mapping, the terminal maps the uplink data subjected to the rate matching to the first transmission resource, and drops part of the uplink data whose rate does not match to the first transmission resource. The mapped uplink data is transmitted using the maximum transmission capacity of the terminal, and the mapped uplink data that causes exceeding of the maximum transmission capacity of the terminal is dropped.

As an example, the first resource is a partial transmission resource within the first transmission resource indicated by the network device via a signaling. The first resource is any one of: first m PRBs with smallest PRB indexes in the first transmission resource, first m PRBs with largest PRB indexes in the first transmission resource, and m PRBs extracted from the first transmission resource according to a predetermined rule. The m PRBs represent a resource quantity determined according to the transmission capacity of the terminal.

The descriptions of the first smallest m PRBs, the first largest m PRBs and the predetermined rule may be referred to the detailed descriptions in the above embodiments, which will not be repeated here.

For example, when the first transmission resource is a bandwidth, the terminal performs the rate matching on the transmitted uplink data according to the actually allocated bandwidth. During the resource mapping, the terminal maps the uplink data to the first resource within a bandwidth capacity for the transmission. Because the actually allocated bandwidth exceeds the maximum transmission capacity of the terminal, when performing the resource mapping, part of the uplink data subjected to the rate matching cannot be mapped to the bandwidth capacity, and the uplink data subjected to the rate matching that exceeds a range of the bandwidth capacity will be dropped.

In response to that the first transmission resource allocated to the terminal for transmitting the uplink data exceeds the transmission capacity of the terminal, the terminal performs the rate matching on the uplink data according to the first transmission resource of the terminal, and maps the uplink data subjected to the rate matching to the first resource within the transmission capacity of the terminal for the transmission, which clarifies a transmission behavior of the terminal.

FIG. 14 is a flowchart of an uplink data transmission method according to an embodiment of the disclosure. The method is performed by a terminal. As illustrated in FIG. 14, the method includes, but is not limited to, the following steps.

At step S1401, in response to a first transmission resource allocated to the terminal for transmitting the uplink data exceeding a transmission capacity of the terminal, rate matching is performed on the uplink data according to a maximum transmission capacity of the terminal.

At step S1402, the uplink data subjected to the rate matching is mapped to a first resource within the transmission capacity of the terminal for transmission.

After receiving the first transmission resource of the uplink data transmitted by the network device, the terminal matches the transmission capacity of the terminal with the first transmission resource. When it is determined that the first transmission resource for transmitting the uplink data exceeds the transmission capacity of the terminal, the terminal performs the rate matching on the transmitted uplink data according to the maximum transmission capacity of the terminal, regardless of whether the allocated first transmission resource exceeds the first threshold. After completing channel coding and rate matching on the transmitted uplink data in sequence, during the resource mapping, the uplink data subjected to the rate matching is mapped to the first resource within the transmission capacity of the terminal for the transmission.

It should be noted that although the first transmission resource allocated by the network device to the terminal exceeds the maximum transmission capacity of the terminal, the actually allocated first transmission resource is not used when performing the rate matching on the uplink data. Instead, the rate matching is performed on the transmitted uplink data according to the maximum transmission capacity of the terminal. The uplink data obtained after the rate matching performed according to the maximum transmission capacity of the terminal may be exactly mapped to the resource corresponding to the maximum transmission capacity of the terminal during performing the resource mapping, and there is no situation where the uplink data subjected to the rate matching is dropped.

As an example, when the first transmission resource is a bandwidth, the terminal directly performs the rate matching on the transmitted uplink data according to a maximum bandwidth, and maps the uplink data to the first resource within a bandwidth capacity for the transmission.

In response to that the first transmission resource allocated to the terminal for transmitting the uplink data exceeds the transmission capacity of the terminal, the terminal performs the rate matching on the uplink data according to the maximum transmission capacity of the terminal, and maps the uplink data subjected to the rate matching to the first resource within the transmission capacity of the terminal for the transmission. That is, according to a magnitude relationship between the first transmission resource and the maximum transmission capacity of the terminal, a transmission behavior of the terminal is clarified.

Corresponding to the uplink data transmission methods provided in the embodiments of FIGS. 2-14, the disclosure also provides an uplink data transmission apparatus. Since the uplink data transmission apparatus provided in the embodiments of the disclosure corresponds to the uplink data transmission methods provided in the embodiments of FIGS. 2-14, the implementations of the uplink data transmission methods are also applicable to the uplink data transmission apparatus provided in the embodiments of the disclosure, which will not be described in detail in the embodiments of the disclosure.

FIG. 15 is a schematic diagram of an uplink data transmission apparatus according to an embodiment of the disclosure. The apparatus is configured in a terminal. As illustrated in FIG. 15, the apparatus includes:
a processing module 151, configured to, in response to a first transmission resource allocated to the terminal for transmitting the uplink data exceeding a transmission capacity of the terminal, abandon transmission of the uplink data, and/or, transmit a first signal using the first transmission resource.

In an implementation, the processing module 151 is further configured to:
transmit the first signal using a partial transmission resource within the first transmission resource.

In an implementation, the processing module 151 is further configured to:
determine, according to a predetermined rule, the partial transmission resource within the first transmission resource for transmitting the first signal; and
transmit the first signal via the partial transmission resource.

In an implementation, the partial transmission resource includes any one of:
a PRB with a largest index in the first transmission resource; and
a PRB with a smallest index in the first transmission resource.

In an implementation, as illustrated in FIG. 15, the apparatus further includes:
a receiving module 152, configured to receive a second transmission resource sent by the network device, in which the second transmission resource is a transmission resource, within a range of the transmission capacity of the terminal, re-allocated by the network device to the terminal; and
the processing module 151, further configured to perform the transmission of the uplink data based on the second transmission resource.

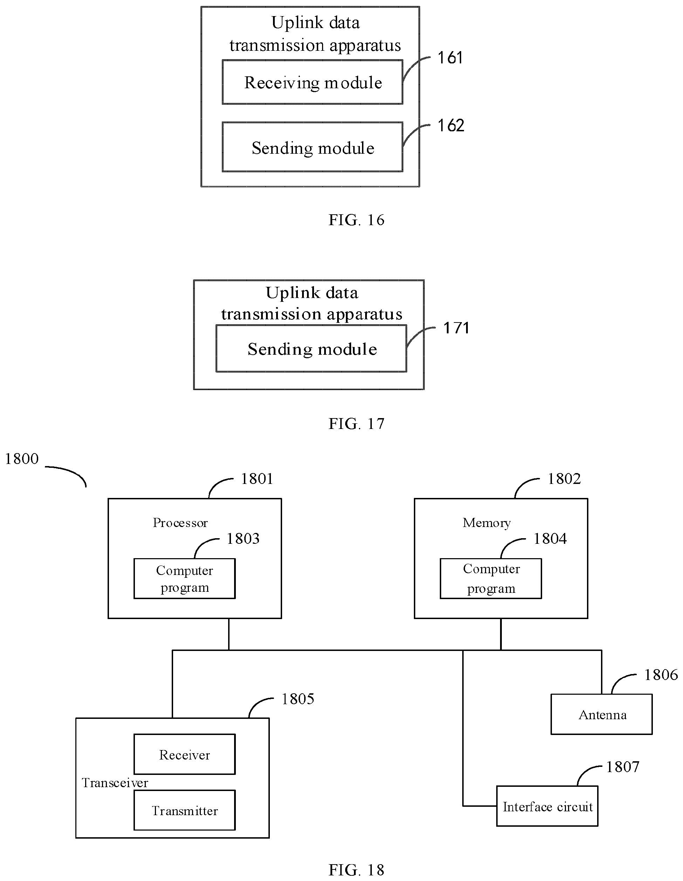

FIG. 16 is a schematic diagram of an uplink data transmission apparatus according to an embodiment of the disclosure. The apparatus is configured in a network device. As illustrated in FIG. 16, the apparatus includes:
a receiving module 161, configured to receive a first signal sent by a terminal, in which the first signal is configured to indicate that a first transmission resource allocated by the network device exceeds a transmission capacity of the terminal, and/or indicate the transmission capacity of the terminal.

In an implementation, the receiving module 161 is further configured to:
receive the first signal transmitted by the terminal using a partial transmission resource within the first transmission resource, in which the first transmission resource is a transmission resource allocated by the network device, without knowing a type of the terminal, to the terminal for transmitting the uplink data.

In an implementation, the partial transmission resource includes any one of:
a PRB with a largest index in the first transmission resource; and
a PRB with a smallest index in the first transmission resource.

In an implementation, the apparatus further includes:
a sending module 162, configured to send a second transmission resource to the terminal, in which the second transmission resource is a transmission resource, within a range of the transmission capacity of the terminal, re-allocated by the network device to the terminal.

FIG. 17 is a schematic diagram of an uplink data transmission apparatus according to an embodiment of the disclosure. The apparatus is configured in a terminal. As illustrated in FIG. 17, the apparatus includes:
a sending module 171, configured to, in response to a first transmission resource allocated to the terminal for transmitting uplink data exceeding a transmission capacity of the terminal, perform transmission of the uplink data.

In an implementation, the sending module 171 is further configured to: in response to that the first transmission resource exceeds the transmission capacity of the terminal and is greater than a first threshold, abandon the transmission of the uplink data;
in which the first threshold is great than a maximum transmission capacity of the terminal.

In an implementation, the sending module 171 is further configured to: in response to that the first transmission resource exceeds the transmission capacity of the terminal and is less than a first threshold, perform the transmission of the uplink data;
in which the first threshold is great than a maximum transmission capacity of the terminal.

In an implementation, the sending module 171 is further configured to:
perform rate matching on the uplink data according to the first transmission resource; and
map the uplink data subjected to the rate matching to a first resource within the transmission capacity of the terminal for the transmission.

In an implementation, the sending module is further configured to:
perform rate matching on the uplink data according to the maximum transmission capacity of the terminal; and
map the uplink data subjected to the rate matching to a first resource within the transmission capacity of the terminal for the transmission and drop uplink data subjected to the rate matching that cause exceeding of a capacity range of the terminal.

In an implementation, the first resource is any one of:
first m PRBs with smallest PRB indexes in the first transmission resource, first m PRBs with largest PRB indexes in the first transmission resource, and m PRBs extracted from the first transmission resource according to a predetermined rule.

In an implementation, the first resource is a partial transmission resource within the first transmission resource indicated by the network device via a signaling.

As illustrated in FIG. 18, FIG. 18 is a schematic diagram of a communication apparatus 1800 provided by an embodiment of the disclosure. In FIG. 18, the communication apparatus 1800 may be a network device, a terminal, or a chip, a chip system or a processor that supports the network device to realize the above-described methods, or a chip, a chip system or a processor that supports the terminal to realize the above-described methods. The apparatus may be configured to realize the methods described in the above method embodiments with reference to the descriptions of the above-described method embodiments.

The communication apparatus 1800 includes one or more processors 1801. The processor 1801 may be a general purpose processor or a dedicated processor, such as, a baseband processor or a central processor. The baseband processor is configured for processing communication protocols and communication data. The central processor is configured for controlling the communication apparatus (e.g., base station, baseband chip, terminal, terminal chip, a CU, or a DU), executing computer programs, and processing data of the computer programs.

Optionally, the communication apparatus 1800 may further include one or more memories 1802 on which computer programs 1804 are stored. When the processor 1801 executes the computer programs 1804, the communication apparatus 1800 is caused to perform the methods described in the above method embodiments. Optionally, the memory 1802 also stores data. The communication apparatus 1800 and the memory 1802 may be provided separately or may be integrated together.

Optionally, the communication apparatus 1800 may also include a transceiver 1805 and an antenna 1806. The transceiver 1805 may be referred to as transceiver unit, transceiver machine, or transceiver circuit, for realizing a transceiver function. The transceiver 1805 may include a receiver and a transmitter. The receiver may be referred to as receiver machine or receiving circuit, for realizing a receiving function. The transmitter may be referred to as transmitter machine or transmitting circuit, for realizing a transmitting function.

Optionally, the communication apparatus 1800 may also include one or more interface circuits 1807. The interface circuits 1807 are configured to receive code instructions and send the code instructions to the processor 1801. The processor 1801 runs the code instructions to cause the communication apparatus 1800 to perform the methods described in the method embodiments.

When the communication apparatus 1800 is a terminal, the transceiver 1805 is configured to perform steps such as step 704 in FIG. 7.

When the communication apparatus 1800 is a network device, the transceiver 1805 is configured to perform steps such as step 401 in FIG. 4.

In an implementation, the processor 1801 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be configured for code/data reading and writing, or may be configured for signal transmission or delivery.

In an implementation, the processor 1801 may store computer programs 1803. When the processor 1801 runs the computer programs 1803, the communication apparatus 1800 is caused to perform the methods described in the method embodiments above. The computer programs 1803 may be solidified in the processor 1801, in which case the processor 1801 may be implemented by hardware.

In an implementation, the communication apparatus 1800 may include circuits. The circuits may implement the sending, receiving or communicating function in the preceding method embodiments. The processors and transceivers described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus described above in the embodiment may be a network device or a terminal, but the scope of the communication apparatus described in the disclosure is not limited thereto, and the structure of the communication apparatus is not limited by FIG. 18. The communication apparatus may be a stand-alone device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

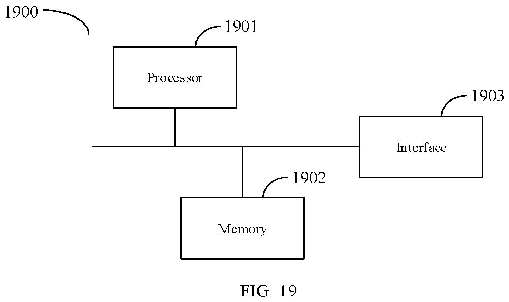

The case where the communication apparatus is a chip or a chip system may be referred to the schematic diagram of the chip shown in FIG. 19. The chip shown in FIG. 19 includes a processor 1901 and an interface 1903. There may be one or more processors 1901, and there may be multiple interfaces 1903.

In the case where the chip is configured to realize the functions of the terminal in the embodiment of the disclosure,
the interface 1903 is configured to perform step 704 in FIG. 7.

Optionally, the chip 1900 further includes a memory 1902 configured for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementations should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable apparatuses. The computer programs may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums, such as a server or a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

It is further understood that "a plurality of" in the disclosure refers to two or more, which is similar to other quantifiers. The term "and/or" describes association relationships of related objects, i.e., it indicates three kinds of relationships. For example, "A and/or B" indicates three relationships, i.e., A exists alone, A and B both exist, and B exists alone. The character "/" generally indicates that related objects before and after the character is in an "or" relationship. The singular forms of "a" and "the" are also intended to include plural forms, unless the context clearly indicates other meanings.

It is further understood that the meanings of terms such as "in response to", "if" or "in case of' involved in the disclosure depend on the context and the actual scene. For example, the term "if" used here may be interpreted as "when" or "upon".

The correspondences shown in the tables in the disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

## Claims

1. An uplink data transmission method, performed by a terminal, comprising:
in response to a first transmission resource allocated to the terminal for transmitting uplink data exceeding a transmission capacity of the terminal, abandoning transmission of the uplink data, and/or, transmitting a first signal using the first transmission resource;
wherein the first signal is configured to indicate that the first transmission resource allocated by a network device exceeds the transmission capacity of the terminal, and/or indicate the transmission capacity of the terminal.

2. The method of claim 1, wherein transmitting the first signal using the first transmission resource, comprises:
transmitting the first signal using a partial transmission resource within the first transmission resource.

3. The method of claim 2, wherein transmitting the first signal using the partial transmission resource within the first transmission resource, comprises:
determining, according to a predetermined rule, the partial transmission resource within the first transmission resource for transmitting the first signal; and
transmitting the first signal via the partial transmission resource.

4. The method of claim 3, wherein the partial transmission resource comprises any one of:
a physical resource block (PRB) with a largest index in the first transmission resource; and
a PRB with a smallest index in the first transmission resource.

5. The method of claim 4, further comprising:
receiving a second transmission resource sent by the network device, wherein the second transmission resource is a transmission resource re-allocated by the network device to the terminal within a range of the transmission capacity of the terminal; and
performing the transmission of the uplink data based on the second transmission resource.

6. An uplink data transmission method, performed by a network device, comprising:
receiving a first signal transmitted by a terminal, wherein the first signal is configured to indicate that a first transmission resource allocated by the network device exceeds a transmission capacity of the terminal, and/or indicate the transmission capacity of the terminal.

7. The method of claim 6, wherein receiving the first signal sent by the terminal, comprises:
receiving the first signal transmitted by the terminal using a partial transmission resource within the first transmission resource, wherein the first transmission resource is a transmission resource allocated by the network device, without knowing a type of the terminal, to the terminal for transmitting the uplink data.

8. The method of claim 7, wherein the partial transmission resource comprises any one of:
a physical resource block (PRB) with a largest index in the first transmission resource; and
a PRB with a smallest index in the first transmission resource.

9. The method of any one of claims 6-8, further comprising:
sending a second transmission resource to the terminal, wherein the second transmission resource is a transmission resource re-allocated by the network device to the terminal within a range of the transmission capacity of the terminal.

10. An uplink data transmission method, performed by a terminal, comprising:
in response to a first transmission resource allocated to the terminal for transmitting uplink data exceeding a transmission capacity of the terminal, performing transmission of the uplink data.

11. The method of claim 10, wherein in response to the first transmission resource allocated to the terminal for transmitting the uplink data exceeding the transmission capacity of the terminal, performing the transmission of the uplink data, comprises:
in response to that the first transmission resource exceeds the transmission capacity of the terminal and is greater than a first threshold, abandoning the transmission of the uplink data;
wherein the first threshold is great than a maximum transmission capacity of the terminal.

12. The method of claim 10, wherein in response to the first transmission resource allocated to the terminal for transmitting the uplink data exceeding the transmission capacity of the terminal, performing the transmission of the uplink data, comprises:
in response to that the first transmission resource exceeds the transmission capacity of the terminal and is less than a first threshold, performing the transmission of the uplink data;
wherein the first threshold is great than a maximum transmission capacity of the terminal.

13. The method of any one of claims 11-12, wherein performing the transmission of the uplink data, comprises:
performing rate matching on the uplink data according to the first transmission resource; and
wherein the performing the transmission of the uplink data, further comprises:
mapping the uplink data subjected to the rate matching to a first resource within the transmission capacity of the terminal for the transmission, and dropping uplink data subjected to the rate matching that causes exceeding of a capacity range of the terminal; or,
mapping the uplink data subjected to the rate matching to the first transmission resource, transmitting mapped uplink data using the maximum transmission capacity of the terminal, and dropping mapped uplink data that causes exceeding of the maximum transmission capacity of the terminal.

14. The method of any one of claims 11-12, wherein performing the transmission of the uplink data, comprises:
performing rate matching on the uplink data according to the maximum transmission capacity of the terminal; and
mapping the uplink data subjected to the rate matching to a first resource within the transmission capacity of the terminal for the transmission.

15. The method of claim 13 or 14, wherein the first resource is any one of:
first m physical resource blocks (PRBs) with smallest PRB indexes in the first transmission resource, first m PRBs with largest PRB indexes in the first transmission resource, and m PRBs extracted from the first transmission resource according to a predetermined rule, wherein the m PRBs represent a resource quantity determined according to the transmission capacity of the terminal.

16. The method of claim 13 or 14, wherein the first resource is a partial transmission resource within the first transmission resource indicated by the network device via a signaling.

17. An uplink data transmission apparatus, configured in a terminal, comprising:
a processing module, configured to, in response to a first transmission resource allocated to the terminal for transmitting uplink data exceeding a transmission capacity of the terminal, abandon transmission of the uplink data, and/or, transmit a first signal using the first transmission resource;
wherein the first signal is configured to indicate that the first transmission resource allocated by a network device exceeds the transmission capacity of the terminal, and/or indicate the transmission capacity of the terminal.

18. An uplink data transmission apparatus, configured in a network device, comprising:
a receiving module, configured to receive a first signal sent by a terminal, wherein the first signal is configured to indicate that a first transmission resource allocated by the network device exceeds a transmission capacity of the terminal, and/or indicate the transmission capacity of the terminal.

19. An uplink data transmission apparatus, configured in a terminal, comprising:
a sending module, configured to, in response to a first transmission resource allocated to the terminal for transmitting uplink data exceeding a transmission capacity of the terminal, performing transmission of the uplink data.

20. A communication apparatus, comprising a processor and a memory storing computer programs, wherein the processor executes the computer programs stored in the memory to cause the apparatus to perform the method of any one of claims 1-5, the method of any one of claims 6-9 or the method of any one of claims 10-16.

21. A computer-readable storage medium for storing instructions, wherein when the instructions are executed, the method of any one of claims 1-5, the method of any one of claims 6-9 or the method of any one of claims 10-16 is performed.
